# EUROPÄISCHE PATENTSCHRIFT

(11) **EP 3 828 495 B1**
(45) Veröffentlichungstag und Bekanntmachung des Hinweises auf die Patenterteilung: **09.03.2022**
(21) Anmeldenummer: 20210693.6
(22) Anmeldetag: 30.11.2020
(51) Int. Cl.: G01B 13/16, B42D 25/425, B42D 25/48

(54) **VERFAHREN UND VORRICHTUNG ZUR QUALITÄTSPRÜFUNG VON OBERFLÄCHENPRÄGUNGEN FÜR SICHERHEITSDOKUMENTE**
METHOD AND DEVICE FOR QUALITY TESTING OF SURFACE EMBOSSINGS FOR SECURITY DOCUMENTS
MÉTHODE ET DISPOSITIF POUR TESTER LA QUALITÉ DES EMBOSSAGES DE SURFACE POUR DES DOCUMENTS DE SÉCURITÉ

(30) Priorität: 29.11.2019 DE 102019218633
(43) Veröffentlichungstag der Anmeldung: 02.06.2021
(73) Patentinhaber: Bundesdruckerei GmbH, 10969 Berlin (DE)
(72) Erfinder: Siebert, Martin, 10965 Berlin (DE)
(74) Vertreter: Patentanwälte Bressel und Partner mbB

(56) Entgegenhaltungen:
- EP-A2- 0 911 604
- EP-A2- 1 063 491
- DE-T5-112010 000 957

## Beschreibung

Die Erfindung betrifft ein Verfahren und eine Vorrichtung zur Qualitätsprüfung von Oberflächenprägungen für Sicherheitsdokumente, die in sogenannten Prägeblechen ausgebildet sind. Solche Prägebleche werden eingesetzt, um in eine Vielzahl von Sicherheitsdokumenten eine komplementäre Oberflächenprägung einzubringen.

Eine Gruppe von Sicherheitsdokumenten nutzt Oberflächenprägungen als Sicherheitsmerkmal oder Bestandteil eines Sicherheitsmerkmals. Beispielsweise ist es bekannt, in transparentem Kunststoff parallel zueinander verlaufende Zylinderlinsen einzuprägen. Diese sind so bemessen, dass parallel einfallendes Licht von diesen Linsen im Innern des Sicherheitsdokuments fokussiert wird. Abhängig von der Einstrahlrichtung des Lichts liegen die Fokuspunkte bzw. Fokusstreifen der Zylinderlinsen im Innern des Dokuments an unterschiedlichen Positionen. Mittels einer Einstrahlung von Laserlicht mit ausreichender Intensität lassen sich in den Fokuspunkten somit gezielt Schwärzungen erzeugen, die nur aus der Richtung beobachtbar sind, aus der sie ursprünglich erzeugt wurden. Hierdurch wird es möglich, für unterschiedliche Betrachtungsrichtungen unterschiedliche Informationen in Form von Graustufenbildern zu speichern. Solche Sicherheitsmerkmale werden auch als CLI- (Changeable Laser Image) oder MLI- (Multiple Laser Image) Sicherheitsmerkmale bezeichnet. Andere Sicherheitsmerkmale benutzen halbkugelförmige Linsen oder auch beliebige andere Prägestrukturen, beispielsweise um Oberflächenhologramme, Mikroschriften oder Ähnliches zu replizieren.

In der DE 11 2010 000 957 T5 werden ein Linsenarray zur Abbildung einer Vielzahl von Bildelementen in einer Objektebene und ein Verfahren zur Herstellung eines Linsenarrays beschrieben.

Bei der Herstellung von Sicherheitsdokumenten verschleißen die Prägebleche, sodass diese in regelmäßigen Abständen ersetzt werden müssen. Um eine gleichbleibende und hohe Qualität der Prägestrukturen in den Sicherheitsdokumenten gewährleisten zu können, ist es notwendig, die Qualität der Oberflächenprägungen der Prägebleche vor dem Einsatz in der Herstellung der Sicherheitsdokumente zu prüfen.

Aus dem Stand der Technik ist es bekannt, von der Oberflächenprägung eines neuen Prägeblechs einen Abdruck mittels aushärtbare Kunststoffs herzustellen und dann von diesem Schliffbilder mit einem Mikroskop zu untersuchen. Dieses bietet zwar den Vorteil, dass Fehler vor der Produktion erkannt werden und nicht erst an Qualitätsfehlern der Sicherheitsdokumente. Die Methode ist jedoch sehr zeitintensiv und benötigt entsprechend geschultes Personal, um diese durchzuführen. Außerdem ist ein hoher apparativer Aufwand notwendig.

Eine andere Möglichkeit, die Strukturen der Oberflächenprägung zu untersuchen, besteht darin, die Linsenstrukturen der Oberflächenprägung mittels Laser-Scanningmikroskopen direkt zu untersuchen. Dieses Verfahren ist jedoch sehr kostenintensiv. Ferner könne mit einem Mikroskop aufgrund dessen hoher Auflösung immer nur kleine Flächenanteile der einzelnen Linsenfelder untersucht werden. Um die gesamten Strukturen der Oberflächenprägung zu untersuchen, ist daher ein hoher zeitlicher Aufwand notwendig.

Die EP 1 063 491 A2 beschreibt ein Verfahren sowie eine Vorrichtung zum Bestimmen der Position eines Oberflächenabschnitts eines geformten Kunststoffteils. Das Verfahren ist durch die folgenden Schritte gekennzeichnet: Bereitstellen eines Sensorelements mit zumindest einem Auslass für ein fluides Medium, wobei der Auslass im Bereich einer Sollposition des Oberflächenabschnitts positioniert wird, Ausströmenlassen des fluiden Mediums durch den Auslass und Bestimmen eines Parameters, der für eine Austrittsmenge des fluiden Mediums aus dem Auslass charakteristisch ist. Das Verfahren kann zur Qualitätskontrolle von geformten Kunststoffteilen beim Entformen aus dem Formnest einer Formmaschine oder zur Positionsbestimmung eines Kunststoffteils verwendet werden.

Die EP 0 911 604 A2 beschreibt eine Prüfeinrichtung für Langprofile, insbesondere durch Extrusion hergestellte Langprofile. Das Langprofil wird durch ein Kaliber bewegt, das im Querschnitt dem Langprofil entspricht. Zumindest an kritischen Bereichen des Kalibers sind an Saugquellen mit Drucksensoren angeschlossene Öffnungen vorgesehen, die in Abhängigkeit von der Maßhaltigkeit des Langprofils mehr oder weniger stark abgedeckt werden. Die Drucksensoren zeigen dann an, wo das Langprofil nicht maßhaltig ist

Aus der US 7,325,445 B1 ist eine Vorrichtung zum Testen einer Oberflächenrauheit bekannt, die eine Probe mit einem glatten Oberflächenabschnitt aufweist, dessen Kontur an die eines zu prüfenden Werkstücks angepasst ist. Zum Prüfen der Oberflächenrauheit eines Zylinders weist der Oberflächenabschnitt entlang einer Richtung die Krümmung des Zylinders auf. Mittels einer Vakuumpumpe kann die Luft aus dem Zwischenraum zwischen Werkstück und aufgelegter Probe abgesaugt werden. Es wird beispielsweise eine in den abgepumpten Bereich nachströmende Fluidmenge gemessen. Anhand eines Vergleichs der ermittelten nachströmenden Fluidmenge mit einer an einem Vergleichsstück mit bekannter Rauheit ermittelten nachströmenden Fluidmenge kann auf die Rauheit des vermessenen Werkstücks zurückgeschlossen werden.

Auch die WO 2006/111795 A1 beschreibt eine Vorrichtung zum Ermitteln einer Oberflächenrauheit. Eine feste Schürze umschließt einen Hohlraum oberhalb einer zu vermessenden Oberfläche, aus dem Luft abgepumpt wird. Die zwischen Schürzenkante und zu vermessenden Oberfläche einströmende Luft ist abhängig von der Rauheit der zu vermessenden Oberfläche. Der sich ergebende Luftdruck in dem umschlossenen Hohlraum ist ein Maß für die Rauheit der Oberfläche.

Der Erfindung liegt somit die Aufgabe zugrunde, Oberflächenprägungen von Prägeblechen schneller und kostengünstiger, jedoch zuverlässig auf ihre Qualität zu prüfen.

Die Erfindung wird durch eine Vorrichtung mit den Merkmalen des Patentanspruchs 1 sowie ein Verfahren mit den Merkmalen des Patentanspruchs 8 gelöst. Vorteilhafte Ausführungen ergeben sich aus den Unteransprüchen.

### Grundidee der Erfindung

Der Erfindung liegt die Idee zugrunde, einen Prüfkopf herzustellen, der an einer Prüfseite zumindest abschnittsweise ein Oberflächenrelief aufweist, welches komplementär zu zumindest einem Teilbereich einer Sollkontur der zu prüfenden Oberflächenprägung ist. Ein Teil der Prüfseite, an der das zu der Sollkontur der zu prüfenden Oberflächenprägung komplementäre Oberflächenrelief ausgebildet ist, weist keine Oberflächenreliefstrukturen auf, sondern bildet ein Freivolumen, welches zur Prüfseite hin offen ist. Durch den Prüfkopf hindurch wird das Freivolumen mit einer Unterdruckerzeugungseinrichtung fluidtechnisch verbunden. Setzt man den Prüfkopf auf die Oberflächenprägung auf und erzeugt mit der Unterdruckerzeugungseinrichtung einen Unterdruck, so ist die Menge der in das Freivolumen einströmenden Luft davon abhängig, ob das Oberflächenrelief in einem Reliefbereich, welches das Freivolumen umschließt, wie vorgesehen komplementär zu der zu prüfenden Oberflächenprägung ist. Ist dies der Fall, so bildet sich ein Unterdruck in dem Freivolumen bzw. der fluidtechnischen Verbindung des Freivolumens mit der Unterdruckerzeugungseinrichtung aus. Über eine Messeinrichtung, welche mit einer Auswerteeinrichtung verbunden ist, kann somit anhand des sich einstellenden Unterdrucks bzw. einer stationären sich ausbildenden Fluidströmung ermittelt werden, ob die zu prüfende Oberflächenprägung des Prägeblechs komplementär zu dem Oberflächenrelief des Prüfkopfes ist. Bestehen Abweichungen in der zu prüfenden Oberflächenprägung von der Sollkontur, stellt sich in der fluidtechnischen Verbindung zwischen dem Freivolumen und der Unterdruckerzeugungseinrichtung kein Unterdruck oder ein höherer Druck, also ein Druck, der einen geringeren Abstand zu einem Bezugsdruck aufweist, als bei einem Prägeblech mit einer Oberflächenprägung ein, die der Sollkontur entspricht. Entsprechend ist die Fluidströmung durch die fluidtechnische Verbindung zwischen dem Freivolumen und der Unterdruckerzeugungseinrichtung höher als der Fluidstrom, der sich einstellt, wenn die Oberflächenprägung des Prägeblechs der Sollkontur entspricht. Entsprechend kann die Auswerteeinrichtung anhand des ermittelten Unterdrucks oder anhand der ermittelten Fluidströmung eine Qualitätsinformation ausgeben, welche in der einfachsten Form angibt, ob die Oberflächenprägung in ausreichendem Maße mit der Sollkontur übereinstimmt oder nicht.

### Definition

Ein Druck ist jeweils eine positive Größe, die größer als 0 ist. Von einem Unterdruck wird gesprochen, wenn der Druck in einem Volumen geringer als ein Bezugsdruck ist. Im Zusammenhang mit der hier beschriebenen Erfindung ist der Bezugsdruck jeweils der Atmosphärendruck bzw. der Druck der Umgebung, in der sich das Prüfobjekt befindet, auf dem der Prüfkopf aufgesetzt wird. In der Regel ist somit der Bezugsdruck der atmosphärische Druck.

Auch ein Unterdruck ist somit immer ein positiver Druck, der jedoch geringer als der Bezugsdruck ist. Werden Unterdrücke miteinander verglichen, so werden hier immer die Drücke und nicht Abstände zu dem Bezugsdruck verglichen. Ein höherer Unterdruck weist somit einen geringeren Abstand von dem Bezugsdruck auf als der geringere Unterdruck. Der Wortbestandteil "Unter" von Unterdruck kann somit weggedacht werden, wenn Unterdrücke miteinander oder einem Druck verglichen werden. Das Wortbestandteil "Unter" deutet lediglich an, dass der Druck geringer als der Bezugsdruck ist.

Der niedrigste zu erreichende Unterdruck ist somit der niedrigste Druck, der sich mit einer Unterdruckerzeugungseinrichtung in einem Volumen erreichen lässt, welches durch die Unterdruckerzeugungseinrichtung evakuiert wird bzw. aus dem heraus Fluidmoleküle gepumpt werden. Der niedrigste zu erreichende Unterdruck weist die maximal erreichbare Druckdifferenz zum Bezugsdruck auf. Dieser wird manchmal auch, abweichend von obiger Konvention, maximal erreichbarer Unterdruck genannt.

Eine Fluidströmung gibt hier die Anzahl von Teilchen pro Zeitintervall, die durch eine Querschnittsfläche bewegen.

### Bevorzugte Ausführungsformen

Es wird somit eine Prüfvorrichtung zur Qualitätsprüfung einer Oberflächenprägung eines Prägeblechs für die Sicherheitsdokumentenherstellung geschaffen, welches umfasst:
- mindestens einen Prüfkopf, welcher an einer Prüfseite eine Prüffläche aufweist, wobei die Prüffläche mindestens einen um mindestens ein Freivolumen umlaufenden Reliefbereich aufweist, wobei der mindestens eine Reliefbereich ein Oberflächenrelief aufweist, welches komplementär zu zumindest einem Teilbereich einer Sollkontur der zu prüfenden Oberflächenprägung ist, wobei das mindestens eine Freivolumen zu der Prüfseite des mindesten einen Prüfkopfs offen ist:
- eine Unterdruckerzeugungseinrichtung, welche fluidtechnisch durch den mindestens einen Prüfkopf mit dem mindestens einen Freivolumen verbunden ist;
- eine fluidtechnisch mit der Unterdruckerzeugungseinrichtung und dem Freivolumen verbundene Messeinrichtung; und
- eine mit der Messeinrichtung verbundene Auswerteeinrichtung, so dass in einem aufgesetzten Zustand des mindestens einen Prüfkopfs, in dem die Auflagefläche auf den zumindest einen Teilbereich der zu prüfenden Oberflächenprägung aufgesetzt ist, der sich ergebende Unterdruck oder die stationäre Fluidströmung mit der Messeinrichtung bei Betrieb der Unterdruckerzeugungseinrichtung ermittelbar ist, und die Auswerteeinrichtung ausgebildet ist, anhand des ermittelten Unterdrucks oder der ermittelten Fluidströmung eine Qualitätsinformation auszugeben.

Ferner wird ein Verfahren zur Qualitätsprüfung einer Oberflächenprägung eines Prägeblechs für die Sicherheitsdokumentenherstellung mit der hier beschriebenen Vorrichtung geschaffen, wobei das Verfahren umfasst:
- Aufsetzen des Prüfkopfs mit Reliefbereich auf die zu prüfende Oberflächenprägung, so dass der Reliefbereich auf dem Teilbereich der Oberflächenprägung aufliegt, die mit der zu dem Reliefbereich komplementären Sollkontur korrespondiert;
- Evakuieren des Freivolumens in dem Prüfkopf mittels der hiermit fluidtechnisch verbundenen Unterdruckerzeugungseinrichtung und Messen eines sich in der fluidtechnischen Verbindung des mindestens einen Freivolumens in dem mindestens einen Prüfkopf mit der Unterdruckerzeugungseinrichtung einstellenden Unterdrucks oder einer sich einstellenden Fluidströmung und Ableiten und Ausgeben einer Qualitätsinformation anhand des ermittelten Unterdrucks oder der ermittelten Fluidströmung.

Die Erfindung bietet den Vorteil, dass auf einfache Weise für große Abschnitte der Oberflächenprägung eines Prägeblechs die Oberflächenkontur auf einfache und zeitsparende Weise geprüft werden kann. Ferner sind keine besonderen Spezialkenntnisse notwendig, um die Prüfung auszuführen.

Besonders bevorzugt wird als Messeinrichtung ein Vakuummessgerät oder ein Druckmessgerät verwendet. Hierbei kann jedes technische Prinzip eingesetzt werden, welches in der Lage ist, den Unterdruck, der durch die Unterdruckerzeugungseinrichtung erzeugt wird, reproduzierbar zu messen.

In der Regel werden Unterdruckerzeugungseinrichtungen eingesetzt, die in der Lage sind, das Freivolumen und die fluidtechnische Verbindung zur Unterdruckerzeugungseinrichtung auf etwa 200 hPa, bevorzugt 50 hPa bis 100 hPa oder auch bei komplizierten Strukturen noch geringere Drücke zu evakuieren.

Die Leistungsfähigkeit der Unterdruckerzeugungseinrichtung ist angepasst an die Größe der zu prüfenden Oberflächenprägung bzw. die Größe des Prüfkopfes und hier insbesondere das Verhältnis des das mindestens eine Freivolumen umlaufend umschließenden Reliefbereichs zur Größe des Freivolumens.

Um unterschiedliche Oberflächenprägungen und auch unterschiedliche Prüfköpfe einsetzen zu können sowie um eine möglichst schnelle Messung zu ermöglichen, ist es vorteilhaft, dass zwischen der Unterdruckerzeugungseinrichtung und dem Prüfkopf eine einstellbare Drossel angeordnet ist. Die einstellbare Drossel kann beispielsweise ein einstellbares Ventil sein. Gemäß einer vorteilhaften Weiterbildung des erfindungsgemäßen Verfahrens wird der sich ergebende Unterdruck mit einem Referenzdruck, der auch als Referenzunterdruck bezeichnet wird, oder die sich ergebende Fluidströmung mit einer Referenzfluidströmung verglichen und die Qualitätsinformation anhand dieses Vergleichsergebnisses ermittelt, wobei bei einer Übereinstimmung im Rahmen eines vorgegebenen Toleranzintervalls die Qualitätsinformation ein Erfüllen der Qualitätserfordernisse angibt. Auch ein Unterschreiten des Referenzdrucks oder der Referenzfluidströmung wird als ein Erfüllen des Qualitätserfordernisses angesehen. D.h., das Qualitätserfordernis ist auch erfüllt, wenn sich ein Druck ergibt, der geringer als der Referenzdruck ist oder sich eine Fluidströmung ergibt, die kleiner als die Referenzfluidströmung ist.

Eine Messzeit, die benötigt wird, um abzuwarten, welcher Unterdruck bzw. welche Fluidströmung sich einstellt, wenn die gesamte Leistungsfähigkeit der Unterdruckerzeugungseinrichtung ausgenutzt wird, hat sich als lang erwiesen. Daher ist bei einer bevorzugten Ausführungsform vorgesehen, dafür zu sorgen, dass der sich ergebende Fluidstrom, d.h. das Nachströmen von Luft in das Freivolumen, auch bei einer Vermessung einer Referenzstruktur, deren Oberflächenprägung als mit der Sollstruktur übereinstimmend angesehen wird, dazu führt, dass sich in der fluidtechnischen Verbindung zwischen dem Freivolumen des Prüfkopfes und der Unterdruckerzeugungseinrichtung ein Unterdruck einstellt, der größer als ein niedrigster erreichbarer Unterdruck ist. D.h., dass sich ein Druck einstellt, der höher ist als der Unterdruck, der dem erreichbaren minimalen Druck entspricht. Dieses wird dadurch erreicht, dass zwischen der Messeinrichtung und der Unterdruckerzeugungseinrichtung eine Drossel angeordnet ist. Insbesondere wird das Verfahren somit so fortgebildet, dass eine Drossel, die zwischen dem Prüfkopf und der Unterdruckerzeugungseinrichtung in der fluidtechnischen Verbindung angeordnet ist, teilweise geschlossen wird, sodass in der fluidtechnischen Verbindung zwischen dem Prüfkopf und der Drossel, wenn der mindestens eine Prüfkopf auf ein Referenzobjekt mit der Sollkontur aufgesetzt ist, sodass der Reliefbereich des Prüfkopfs mit dem hiermit korrespondierenden Teilbereich der Sollkontur aufliegt, ein Referenzdruck, der auch Referenzunterdruck genannt wird, der größer als ein erreichbarer Unterdruck ist, oder eine Referenzfluidströmung eingestellt wird, die kleiner als eine erreichbare Fluidströmung bei geöffneter Drossel ist. Vorzugsweise wird die Drossel so eingestellt, dass der Referenzdruck um etwa 5 % der Differenz zwischen dem Atmosphärendruck und dem niedrigsten erreichbaren Unterdruck der Unterdruckerzeugungseinrichtung größer als der niedrigste erreichbare Unterdruck eingestellt ist. Kann die Unterdruckerzeugungseinrichtung beispielsweise auf einen Unterdruck von etwa 100 hPa evakuieren und wird vorausgesetzt, dass der Atmosphärendruck etwa 1.000 hPa entspricht, so würde der Referenzunterdruck auf etwa 145 - 150 hPa eingestellt. Der konkret geeignete Wert ist von der Beschaffenheit des Profils der Oberflächenprägung sowie der Größe des Prüfkopfs sowie von dem Verhältnis des Flächenanteils der Öffnung des Freivolumens an der Prüfseite im Verhältnis zur Fläche des Reliefbereichs, der das mindestens eine Freivolumen umgibt, abhängig. Bei anderen Ausführungsformen kann vorgesehen sein, dass der Unterdruck beispielsweise auf einen Referenzdruck festgelegt wird, der um 10 % der Differenz zwischen Atmosphärendruck und niedrigsten erreichbarem Unterdruck oberhalb des niedrigsten erreichbaren Unterdrucks festgelegt ist. Durch den Einsatz der Drossel wird es möglich, die Apparatur an beliebige Oberflächenprägungen und beliebig ausgebildete Prüfköpfe anzupassen und immer eine ausreichende Sensitivität der Messung zu erreichen.

Um festzustellen, wie groß der niedrigste erreichbare Unterdruck, d.h. der geringste erreichbare Druck, beispielsweise bei vollständig geschlossener Drossel, ist, ist bei einigen Ausführungsformen vorgesehen, dass zwischen der Drossel und der Vakuumerzeugungseinrichtung eine weitere Referenzmesseinrichtung angeordnet ist, mit der der Unterdruck, der mit der Vakuumerzeugungseinrichtung erreichbar ist, ermittelbar ist.

Um sicherzustellen, dass immer eine ausreichende Restströmung während der Messung von der Atmosphäre in das Freivolumen stattfindet und um für alle Struktureinheiten, die geprüft werden, nahezu gleiche Bedingungen zu schaffen, ist bei bevorzugten Ausführungsformen vorgesehen, dass an der Prüfseite des Prüfkopfs mindestens ein zur Prüfseite offenes, von dem mindestens einen Freivolumen getrenntes Belüftungsvolumen ausgebildet ist, um ein Einströmen von Luft angrenzend an zumindest einen Teil des Reliefbereichs im aufgesetzten Zustand des Prüfkopfs zu ermöglichen. Das mindestens eine Belüftungsvolumen ermöglicht sozusagen ein seitliches Einströmen von Luft unter die Prüfseite des Prüfkopfs. Alternativ kann das Einströmen auch durch den Prüfkopf von einer Seitenfläche oder einer der Prüfseite gegenüberliegenden Fläche aus erfolgen.

Es versteht sich für den Fachmann, dass ein Prüfkopf mehrere jeweils flächig von einem Reliefbereich umschlossene Freibereiche und/oder auch mehrere Belüftungsvolumina umfassen kann. Ferner kann ein Prüfkopf in mehrere Prüfkopfsegmente unterteilt sein, die jeweils mindestens einen vollständig von einem Reliefbereich umschlossenes Freivolumen aufweisen.

Um bei komplizierten Oberflächenprägungen die gesamte Prägung prüfen zu können, kann es notwendig sein, mehrere verschiedene Prüfköpfe zu verwenden, die Reliefbereiche aufweisen, die komplementär zu unterschiedlichen Teilbereichen der Sollkontur der Oberflächenprägung sind.

Bei Prägungen, deren Kontur eine hohe Symmetrie aufweisen, kann jedoch die gesamte Prägung häufig mit einem Prüfkopf untersucht werden, der zeitlich nacheinander unterschiedliche Teilbereiche der Oberflächenprägung untersucht. Insbesondere bei Oberflächenprägungen, deren Sollkontur beispielsweise ein Linsenarray aus parallel zueinander angeordneten zylindrischen Linsenstrukturen entspricht, kann der Prüfkopf schrittweise oder kontinuierlich entlang der ausgezeichneten Symmetrierichtung bewegt werden. Insbesondere bei einer kontinuierlichen Bewegung kann auch die Messung des Unterdrucks kontinuierlich ausgeführt werden. Bei einer Ausführungsform ist daher vorgesehen, dass der Prüfkopf über die zu prüfende Oberflächenprägung bewegt wird und das Ableiten und Ausgeben der Qualitätsinformation fortlaufend oder iterativ erfolgt. Hierdurch wird es möglich, mögliche Fehlstellen auch lokalisieren zu können. Es versteht sich für den Fachmann, dass ein Prägeblech, welches an einer Stelle eine Abweichung von der Sollkontur aufweist, die nicht akzeptabel ist, als Ausschuss ausgesondert oder beim Wareneingang als nicht spezifikationsgemäß zurückgewiesen wird.

Um eine kontinuierliche oder schrittweise Messung an der Oberflächenprägung ausführen zu können, ist bei einer Ausführungsform der Erfindung vorgesehen, dass mit dem Prüfkopf ein Aktor gekoppelt ist, um den Prüfkopf im aufgesetzten Zustand über das Profil zu bewegen. Alternativ kann der Aktor ausgebildet sein, den Prüfkopf iterativ nacheinander lateral beabstandet auf die Oberflächenprägung aufzusetzen. Dies ist beispielsweise bei Ausführungsformen vorteilhaft, bei denen die Oberflächenprägung aus gleichmäßig angeordneten sphärischen Linsenelementen bzw. damit korrespondierenden Oberflächenstrukturen besteht.

Alternativ zu der Messung des Unterdrucks, der sich in der fluidtechnischen Verbindung zwischen dem Prüfkopf und der Drossel einstellt, kann auch jeweils die Einstellung der Drossel verändert werden, bis sich der entsprechende Referenzdruck bzw. die Referenzfluidströmung einstellt. Die Qualität wird dann nicht nur anhand des Drucks, sondern auch anhand der Drosseleinstellung abgeleitet, wobei eine Oberflächenprägung als den Qualitätserfordernissen entsprechend aufgefasst wird, wenn sich der Referenzdruck bzw. die Referenzfluidströmung bei einer Drosseleinstellung einstellt, die den Querschnitt gleich oder stärker einschränkt als die Drosseleinstellung bei der Vermessung eines Referenzobjekts, dessen Oberflächenprägung mit der Sollkontur der Oberflächenprägung übereinstimmt. Es versteht sich, dass sowohl hinsichtlich des Referenzdrucks als auch der Drosselstellung jeweils ein Toleranzbereich vorgegeben sein kann. Die Oberflächenprägung entspricht somit auch den Qualitätserfordernissen, wenn der sich einstellende Druck geringer als der Referenzdruck bei einer Drosseleinstellung ist, die den Querschnitt gleich oder stärker einschränkt als die Drosseleinstellung bei der Vermessung des Referenzobjekts. Folglich entspricht die Oberflächenprägung somit auch den Qualitätserfordernissen, wenn die sich einstellende Fluidströmung geringer als die Referenzfluidströmung bei einer Drosseleinstellung ist, die den Querschnitt gleich oder stärker einschränkt als die Drosseleinstellung bei der Vermessung des Referenzobjekts zur Ermittlung der Referenzfluidströmung.

Nachfolgend wird die Erfindung unter Bezugnahme auf eine Zeichnung näher erläutert. Hierbei zeigen:
- Fig. 1: eine schematische Darstellung eines geprägten Linsenarrays;
- Fig. 2: eine schematische Abbildung einer Oberflächenprägung in einem Prüfobjekt sowie ein dazu korrespondierender Prüfkopf in einer abgehobenen Stellung;
- Fig. 3: eine schematische Darstellung eines Prüfobjekts und eines hiermit korrespondierenden Prüfkopfs in einer aufgesetzten Stellung;
- Fig. 4: eine schematische Seitenansicht eines Prüfkopfs;
- Fig. 5: eine schematische Ansicht der Prüf- oder Unterseite des Prüfkopfs nach Fig. 4;
- Fig. 6: eine schematische Ansicht einer Prüfvorrichtung; und
- Fig. 7: eine schematische Draufsicht auf eine Prüfseite eines weiteren Prüfkopfs.

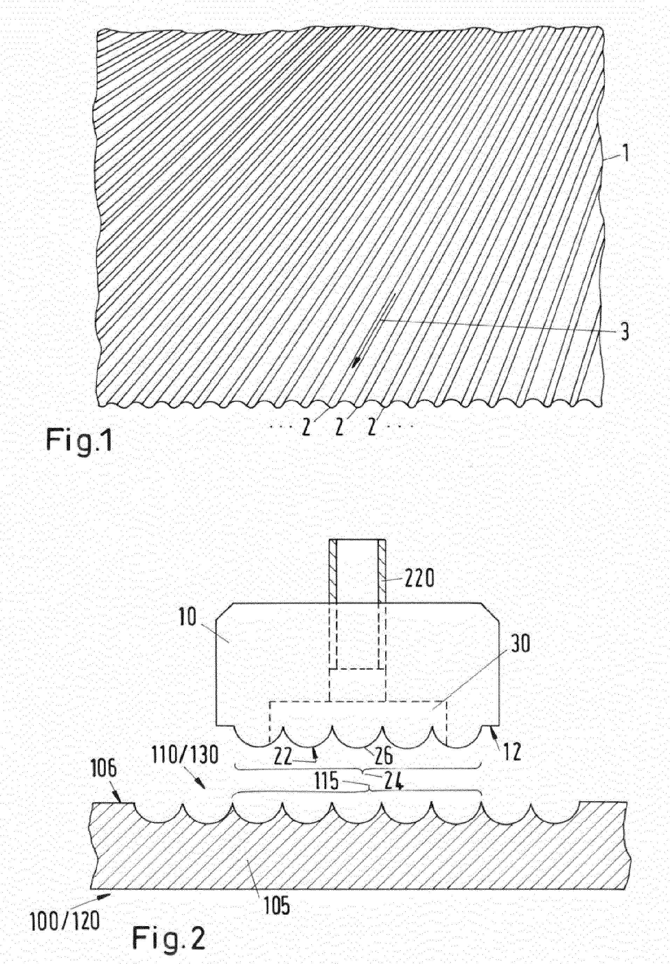

In Fig. 1 ist eine schematische Ansicht eines Linsenarrays 1 in schräger Draufsicht dargestellt. Das Linsenarray 1 umfasst eine Vielzahl nebeneinander angeordneter Zylinderlinsen 2. Die Zylinderlinsen sind alle parallel zu einer Längserstreckungsrichtung 3 ausgerichtet. Quer zur Längserstreckungsrichtung 3 setzt sich das Profil des Linsenarrays 1 aus identischen nebeneinander angeordneten Kreissegmenten zusammen. Entlang der Längserstreckungsrichtung 3 sind die Zylinderlinsen 2 hinsichtlich des Profils translationsinvariant. Dies bedeutet, dass das Profil quer zur Längserstreckungsrichtung 3 an jeder Position entlang der Längserstreckungsrichtung 3 identisch ist.

Das Linsenarray 1 ist beispielsweise in eine transparente Kunststoffoberfläche eines Sicherheitsdokuments eingeprägt, um hiermit ein CLI- oder MLI-Sicherheitsmerkmal auszubilden.

Ein Linsenarray 1, wie es in Fig. 1 schematisch dargestellt ist, wird beispielsweise mittels eines Prägeblechs 105 beim Laminieren in die oberste Schicht eines Laminationskörpers eingeprägt. Das Prägeblech 105, welches exemplarisch in Fig. 2 im Schnitt quer zur Längsrichtung 3 des daraus hergestellten Linsenarrays dargestellt ist, weist somit an einer Oberseite 106 eine Oberflächenprägung 110 auf. Diese setzt sich aus nebeneinander angeordneten Zylinderprofilausnehmungen in der Oberseite 106 zusammen. Der in der Fig. 2 dargestellte Profilquerschnitt erstreckt sich somit in dem Prägeblech senkrecht zur Zeichnungsebene.

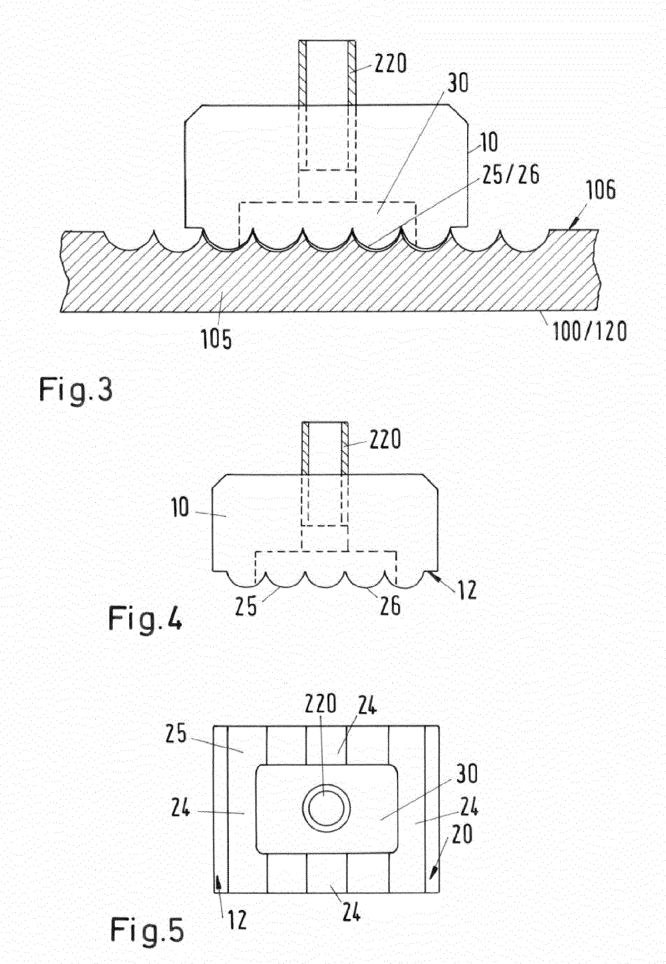

Die Oberflächenprägung 110 ist komplementär zu der in das Sicherheitsdokument eingeprägten Oberflächenstruktur, beispielsweise in diesem Falle einem Linsenarray. Für die Qualitätsprüfung stellt das Prägeblech 105, beispielsweise ein Laminierblech, entweder ein Prüfobjekt 100 oder, sofern bekannt ist, dass die Oberflächenprägung mit der Sollkontur für das Prägeblech übereinstimmt, ein Referenzobjekt 120 dar. Um die Qualität des Prüfobjekts 100, d.h. des Prägeblechs 105, prüfen zu können, ist ein Prüfkopf 10 vorgesehen. Der Prüfkopf weist an einer Unterseite 12 eine Prüfoberfläche 22 auf. Die Prüfoberfläche 22 umfasst mindestens einen Reliefbereich 24 mit einem Oberflächenrelief 26, welches komplementär zu der zu prüfenden Oberflächenprägung 110 ist. Der Reliefbereich 24 ist umlaufend um ein Freivolumen 30 im Innern des Prüfkopfs 10 ausgebildet. Dieses ist am Einfachsten in Fig. 5 zu erkennen, welches in einer Draufsicht auf die Unterseite 12, welche auch Prüfseite 20 des Prüfkopfs genannt wird, schematisch dargestellt ist. In dem Freivolumen, welches zu der Unterseite bzw. Prüfseite 30 des Prüfkopfs 10 offen ist, ist somit kein Oberflächenprofil ausgebildet, welches komplementär zu der zu prüfenden Oberflächenprägung 110 ist. Vielmehr ist die Prüfseite im Bereich der Öffnung des Freivolumens 30 von dem komplementären Oberflächenrelief 26, welches auch als Prüfprofil bezeichnet ist, freigestellt. Das Freivolumen 30 ist durch den Prüfkopf 10 hindurch über eine fluidtechnische Verbindung 220 im Prüfbetrieb mit einer Unterdruckerzeugungseinrichtung (in Fig. 2 nicht dargestellt) verbunden. Wird der Prüfkopf auf die Oberflächenprägung so aufgesetzt, dass das Oberflächenrelief 26 des umlaufenden Reliefbereichs 24 auf jenen Teilbereichen der Oberflächenprägung 110 aufliegt, die mit einer Sollkontur 130 korrespondieren, zu der das Oberflächenrelief 26 komplementär ist, so greifen die Prüfoberfläche 22 des Prüfkopfs 10 in die Oberflächenprägung 110 ein. Hierbei sind das Oberflächenrelief 26 und die Oberflächenprägung 110 zueinander komplementär. Erzeugt man nun einen Unterdruck über die fluidtechnische Verbindung 220 in dem Freivolumen 30, so entsteht in der fluidtechnischen Verbindung 220 ein Unterdruck. Das heißt, es entsteht ein Druck der geringer als ein Bezugsdruck ist, welches der Umgebungsdruck, in der Regel der Atmosphärendruck, ist. Weicht hingegen die Oberflächenprägung 110 des Prüfobjekts 100 von der Sollkontur 130 ab, so ist das Oberflächenrelief 26 des umlaufenden Reliefbereichs 24 nicht exakt komplementär zu der Oberflächenprägung 110 in dem hierzu korrespondierenden Teilbereich 115. Somit entstehen größere Spalten zwischen der Unterseite des Prüfkopfs 10 und der Oberseite 106 der Oberflächenprägung 110. Somit strömt mehr Umgebungsluft in das Freivolumen, sodass ein in der Fluidverbindung 220 gemessener Druck höher ist, als wenn die Oberflächenprägung 110 mit der Sollkontur 130 übereinstimmt.

In Fig. 3 ist der Prüfkopf 10 in der aufgesetzten Stellung auf das Prüfobjekt 100 bzw. auf ein Referenzobjekt 120 dargestellt. Gleiche technische Merkmale sind in allen Figuren mit denselben Bezugszeichen gekennzeichnet.

In Fig. 4 ist der Prüfkopf 10 noch einmal schematisch als Seitenansicht gezeigt, wobei verdeckte Körperkanten gestrichelt dargestellt sind.

In Fig. 5 ist der Prüfkopf 10 von der Unterseite 12, d.h. von der Prüfseite 20 aus, dargestellt. Gut zu erkennen ist das Freivolumen 30, welches in die beispielsweise als Schlauch ausgebildete fluidtechnische Verbindung 220 übergeht.

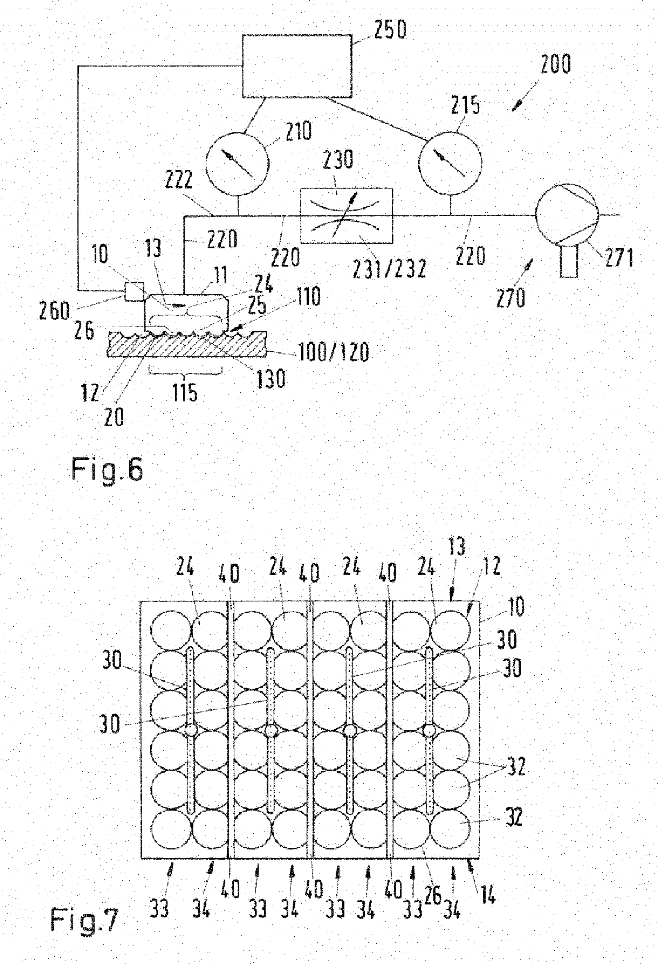

In Fig. 6 ist schematisch eine Prüfvorrichtung 200 für eine Oberflächenprägung 110, welche in einem Prüfobjekt 100 ausgebildet ist, schematisch dargestellt. Die Prüfvorrichtung umfasst einen Prüfkopf 10, mit dem an der Prüfseite 20, welches die Unterseite 12 des Prüfkopfs 10 ist, ausgebildeten Prüfprofil 25. Das Prüfprofil ist komplementär zu einer Sollkontur 130 der zu prüfenden Oberflächenprägung 110. An der Unterseite 12 bzw. der Prüfseite 20 des Prüfkopfs ist somit mindestens einer ein Freivolumen 30 umlaufend umschließender Reliefbereich ausgebildet, dessen Oberflächenrelief 26 komplementär zu Teilbereichen 115 der Sollkontur 130 ist. Wird der Prüfkopf 10 auf die Oberflächenprägung 110 in dem Prüfobjekt 100 abgesetzt, wie dies in Fig. 6 dargestellt ist, so wird über die fluidtechnische Verbindung 220 mittels einer Vakuumerzeugungseinrichtung 270 ein Unterdruck erzeugt. Die Vakuumerzeugungseinrichtung 270 ist in der Regel als Vakuumpumpe 271 ausgebildet.

In der fluidtechnischen Verbindung ist eine Messeinrichtung 210 angeordnet. Diese kann beispielsweise ein Druckmessgerät oder ein Vakuummessgerät sein. Alternativ kann dies ein Messgerät sein, welches eine Fluidströmung messen kann.

Wird der Prüfkopf 10 auf die Oberflächenprägung 110 eines Referenzobjekts 120 aufgesetzt, dessen Oberflächenprägung 110 mit der Sollkontur 130 übereinstimmt, so ergibt sich an der Messeinrichtung 210 in der fluidtechnischen Verbindung 220 ein Referenzdruck bzw. eine Referenzfluidströmung. Insbesondere wenn die Unterdruckerzeugungseinrichtung 270 eine sehr viel größere Fluidströmung als die Referenzfluidströmung bewältigen kann, ohne eine nennenswerte Druckerhöhung herbeizuführen, sind kleine Änderungen in der Fluidströmung bei der Prüfung von Oberflächenprägungen 110 nur schwer zu erfassen. Daher ist vorteilhafterweise zwischen dem Prüfkopf 10 und der Unterdruckerzeugungseinrichtung 270 eine Drossel 230 eingefügt. Vorzugsweise ist die Drossel 230 einstellbar. Beispielsweise kann die Drossel 230 als verstellbares Ventil 231, beispielsweise als Feinventil 232, ausgebildet sein. Wird die Drossel geschlossen, d.h. der Durchtrittsquerschnitt verringert, so kann erreicht werden, dass sich in einem Abschnitt 222 der fluidtechnischen Verbindung 220 zwischen dem Prüfkopf 10 und der Drossel 230 beim Aufsetzen des Prüfkopfs 10 auf ein Referenzobjekt 120 mit der Sollkontur 130 ein Unterdruck, d.h. ein Druck, ergibt, der höher ist als ein niedrigster erreichbarer Unterdruck, der sich ohne die Drossel 230 ergäbe. Vorzugsweise wird die Drossel 230 so eingestellt, dass sich ein Referenzdruck einstellt, wenn der Prüfkopf 10 auf einer Oberflächenprägung 110 aufgesetzt ist, die der Sollkontur 130 entspricht, der um etwa 5 % bis 20 % der Differenz zwischen dem erreichbaren Unterdruck und dem Atmosphärendruck über dem erreichbaren Unterdruck liegt. Lapidar ausgedrückt wird dies als Einstellen des Referenzdrucks auf einen Wert, der etwa 80 % bis 95 % des erreichbaren Unterdrucks entspricht, bezeichnet. Die Prozentangabe bezieht sich hierbei somit auf die maximal erreichbare Druckdifferenz zu dem Bezugsdruck. Hierbei wird davon ausgegangen, dass der erreichbare Unterdruck bzw. Druck im Bereich zwischen 10 hPa und 250 hPa liegt, wobei der Atmosphärendruck bei Normbedingungen bei 1.023 hPa liegt. Um den Referenzdruck über die Einstellung der Drossel 230 auf einfache Weise einstellen zu können, ist bei der Prüfvorrichtung 200, welche in Fig. 6 schematisch dargestellt ist, eine weitere Messeinrichtung 240 zwischen der Drossel 230 und der Vakuumerzeugungseinrichtung angeordnet. Diese misst, zumindest wenn die Drossel vollständig geschlossen ist, den niedrigsten erreichbaren Unterdruck.

Über die Einstellmöglichkeit der Drossel 230 kann die Sensitivität für jede beliebige Oberflächenprägung 110 und jeden Prüfkopf 10 optimal eingestellt werden. Die Prüfvorrichtung 200 wird vorzugsweise so ausgebildet, dass das Freivolumen 30 und die fluidtechnische Verbindung 220 bis zur Drossel 230 vorzugsweise ein möglichst geringes Volumen aufweist, sodass nach dem Aufsetzen des Prüfkopfs 10 auf die Oberflächenprägung 110 sich der erreichbare Enddruck möglichst schnell einstellt. Dies ist gleichbedeutend damit, dass die sich ergebende Fluidströmung ihren Minimalwert erreicht. Ist der Prüfkopf 10 auf ein Referenzobjekt 120, welches als Oberflächenprägung 110 die Sollkontur 130 aufweist, aufgesetzt, entspricht der so erreichte Minimaldruck dem Referenzdruck oder Referenzunterdruck und die sich einstellende Fluidströmung der Referenzfluidströmung.

Um sicherzustellen, dass möglichst alle Profilbestandteile der Oberflächenprägung 110 einen gleichen Anteil zu einer Restströmung beisteuern, die im aufgesetzten Zustand, wenn sich der Enddruck eingestellt hat, strömt, ist es vorteilhaft, wenn an der Prüfseite 20 des Prüfkopfs 10, d.h. an der Unterseite 12 des Prüfkopfs 10, Belüftungsvolumina 40 vorgesehen sind, durch die im aufgesetzten Zustand Luft unter den Prüfkopf strömen kann (vergleiche Fig. 7). Die Belüftungsvolumina 40 können entweder zu einer der Seiten des Prüfkopfs10 oder sogar zu der Oberseite des Prüfkopfs hin offen sein und so ein optimales Einströmen von Umgebungsluft ermöglichen.

Insbesondere bei großen Prägeprofilen muss ein solcher Prüfschritt mehrfach ausgeführt werden. Gegebenenfalls sind hierfür unterschiedliche Prüfköpfe 10 für unterschiedliche Teilbereiche 115 der Oberflächenprägung 110 zu verwenden. Um jedoch ein Linsenprofil von Zylinderlinsen zu prüfen, ist es möglich, große Bereiche dadurch zu prüfen, dass der aufgesetzte Prüfkopf während der Prüfung schrittweise oder kontinuierlich entlang der Längserstreckungsrichtung der Zylinderlinsen bzw. entsprechenden Oberflächenprägungsstrukturen bewegt wird. Entspricht die Oberflächenprägung der Sollkontur, so ändert sich der gemessene Druck, zumindest innerhalb eines Toleranzbereichs, während der Prüfkopf über die Oberflächenprägung bewegt wird, nicht und entspricht dem Referenzdruck. Tritt jedoch während der Bewegung des Prüfkopfs über die Oberflächenprägung 110 zwischenzeitlich ein Druckanstieg oder ein Fluidströmungsanstieg auf, so deutet dieses eine Abweichung der Oberflächenprägung von der Sollkontur an. Um eine solche Messung ausführen zu können, ist der Prüfkopf mit einem Aktor 260 gekoppelt, der den Prüfkopf 10 über die Oberflächenprägung schrittweise oder kontinuierlich bewegt. Auch bei einem Linsenfeld, welches aus sphärischen Linsen besteht, welches beispielsweise komplementär zu dem Prüfprofil des Prüfkopfs 10 ist, der in Fig. 7 schematisch dargestellt ist, kann durch schrittweises Aufsetzen des Prüfkopfes an verschiedenen Positionen eine große Oberflächenprägung 110 in relativ kurzer Zeit kostengünstig und einfach überprüft werden. Ergibt sich jedes Mal nach dem Aufsetzen ein sich einstellender Druck, der im Rahmen von vorgegebenen Messtoleranzen mit dem Referenzdruck übereinstimmt, so stimmt die Oberflächenprägung 110 mit der Sollkontur 130 überein. Treten hingegen an einer oder mehreren Aufsitzpositionen des Prüfkopfs 10 auf der Oberflächenprägung 110 bei der Messung höhere sich einstellende Drücke ein als der Referenzdruck, was gleichbedeutend damit ist, dass die sich einstellende Fluidströmung größer als die Referenzfluidströmung ist, so weist die Oberflächenprägung 110 nicht die Sollkontur 130 auf.

Mit der Auswerteeinrichtung ist optional, wie in der dargestellten Ausführungsform, eine weitere Vakuummesseinrichtung 215 gekoppelt. Diese ist vorzugsweise in oder nahe der Vakuumerzeugungseinrichtung 270 angeordnet und in der Lage, ein von der Vakuumerzeugungseinrichtung 270 erzeugtes Vakuum vor der Drossel 230 zu messen. Hierüber kann beispielsweise eine korrekte Funktionsweise der Vakuumerzeugungseinrichtung 270 überwacht werden. Ein starker Abfall des Vakuums, der an der Vakuumerzeugungseinrichtung 270, der von der weiteren Vakuummesseinrichtung 215 erfasst wird, kann im Messbetrieb bei wirkender Drossel ein Hinweis auf eine Störung oder den Ausfall der Vakuumerzeugungseinrichtung 270 sein, und entsprechend von der Auswerteeinrichtung 250 eine Warnung ausgegeben werden.

In Fig. 7 ist exemplarisch die Draufsicht auf eine Unterseite 12 eines Prüfkopfs 10, d.h. die Prüfseite des Prüfkopfs, schematisch dargestellt. Dieser Prüfkopf 10 ist für das Prüfen von nebeneinander angeordneten sphärischen Strukturelementen zum Ausbilden von sphärischen Linsen in einer Kunststoffoberfläche vorgesehen. Gut zu erkennen sind die sphärischen Profilabschnitte 32. Zwischen jeweils zwei Reihen 33, 34 ist ein Freivolumen 30 angeordnet. Die Freivolumen 30 sind im Prüfkopf 10 unterhalb der gezeigten Zeichnungsebene fluidtechnisch miteinander und dann mit der

Vakuumerzeugungseinrichtung verbunden. Die jeweils zueinander benachbarten Reihen 33, 34 der sphärischen Profilabschnitte 32 bilden jeweils einen umlaufenden Reliefbereich, wobei die sphärischen Profilabschnitte 32 das Oberflächenrelief 26 des umlaufenden Reliefbereichs 24 bilden. Jeweils zwischen zwei benachbarten Reihen 33, 34 ist jeweils ein Belüftungsvolumen 40 ausgebildet. Die Belüftungsvolumina 40 erstrecken sich jeweils von einer Vorderseite 13 zu einer Hinterseite 14 des Prüfkopfs 10, sodass Luft an der Prüfseite 30 unter den Prüfkopf im aufgesetzten Zustand einströmen kann. Hierdurch kann für alle sphärischen Profilabschnitte 32 annähernd gleichartig geprüft werden, ob damit korrespondierende Teilbereiche im aufgesetzten Zustand des Prüfkopfs auf eine Oberflächenprägung korrespondieren oder ob einzelne zu einem sphärischen Profilabschnitt 32 korrespondierender Teilabschnitt einer Oberflächenprägung fehlerhaft ist, sodass der Prüfkopf nicht optimal auf die Oberflächenprägung aufgesetzt werden kann und die sich ergebenden Fluidströme insgesamt größer sind als die Referenzfluidströmung, die zu dem Referenzunterdruck an der Messeinrichtung führt.

Eine Auswerteeinrichtung 250 kann in einer einfachen Ausführungsform darin bestehen, dass auf der Messeinrichtung 210 eine Referenzmarkierung ausgebildet ist, die den Referenzdruck anzeigt, der sich beim Aufsetzen des Prüfkopfs 10 auf ein Referenzobjekt ergibt. Wird der Prüfkopf auf ein Prüfobjekt 100 aufgesetzt, so wird der sich einstellende Druck mit dieser Referenzmarkierung verglichen. Ist der Druck gleich oder geringer als der Referenzdruck, so ist das Prüfobjekt 100 zumindest in den Teilbereichen 115, die unterhalb des umlaufenden Reliefbereichs 24 befindlich sind, spezifikationsgemäß. Ist hingegen der sich ergebende Druck höher, so ist der entsprechende Teilbereich, der dem Oberflächenrelief 110 des Prüfkopfs 10 an der Prüfseite 20 entspricht, nicht spezifikationsgemäß. Bei einer Weiterbildung ist die Auswerteeinrichtung ausgebildet, selbständig einen Vergleich des sich ergebenden Drucks während der Prüfmessung mit dem Referenzdruck zu vergleichen und eine Qualitätsinformation an den Nutzer auszugeben. Diese kann beispielsweise die Angabe spezifikationsgemäß oder nicht spezifikationsgemäß je nach Messergebnis sein. Bei anderen Ausführungsformen kann der sich einstellende Druck bzw. eine Differenz zum Referenzdruck ausgegeben werden.

Es versteht sich für den Fachmann, dass hier lediglich beispielshafte Ausführungsformen beschrieben sind. Die in den einzelnen Beispielen beschriebenen Merkmale können in beliebiger Weise miteinander kombiniert werden, um die Erfindung auszuführen.

### Bezugszeichenliste

- 1: Linsenarray
- 2: Zylinderlinsen
- 3: Längserstreckungsrichtung
- 10: Prüfkopf
- 11: Oberseite
- 12: Unterseite
- 13: Vorderseite
- 14: Rückseite
- 20: Prüfseite
- 22: Prüfoberfläche/Prüffläche
- 24: umlaufender Reliefbereich
- 25: Prüfprofil
- 26: Oberflächenrelief
- 30: Freivolumen
- 32: sphärische Profilabschnitte
- 33, 34: Reihen
- 40: Belüftungsvolumen
- 100: Prüfobjekt
- 105: Prägeblech
- 106: Oberseite
- 110: Oberflächenprägung
- 115: Teilbereich
- 120: Referenzobjekt
- 130: Sollkontur
- 200: Prüfvorrichtung
- 210: Messeinrichtung
- 215: weitere Vakuummesseinrichtung
- 220: fluidtechnische Verbindung
- 222: Abschnitt zwischen Prüfkopf und Drossel
- 230: Drossel
- 231: einstellbares Ventil
- 232: Feinventil
- 240: weitere Messeinrichtung
- 250: Auswerteeinrichtung
- 260: Aktor
- 270: Vakuumerzeugungseinrichtung
- 271: Vakuumpumpe

## Patentansprüche

1. Prüfvorrichtung (200) zur Qualitätsprüfung einer Oberflächenprägung (110) eines
Prägeblechs (105) für die Sicherheitsdokumentenherstellung umfassend mindestens einen Prüfkopf (10), welcher an einer Prüfseite (20) eine Prüffläche (22) aufweist, wobei die Prüffläche (22) mindestens einen um mindestens ein Freivolumen (30) umlaufenden Reliefbereich (24) aufweist, wobei der mindestens eine Reliefbereich (24) ein Oberflächenrelief (26) aufweist, welches komplementär zu zumindest einem Teilbereich (115) einer Sollkontur (130) der zu prüfenden Oberflächenprägung (110) ist, wobei das mindestens eine Freivolumen (30) zu der Prüfseite (20) des mindestens einen Prüfkopfs (10) offen ist,
eine Unterdruckerzeugungseinrichtung (270), welche fluidtechnisch durch den mindestens einen Prüfkopf (10) mit dem mindestens einen Freivolumen (30) verbunden ist;
eine fluidtechnisch mit der Unterdruckerzeugungseinrichtung (270) und dem Freivolumen (30) verbundene Messeinrichtung (210), und
eine mit der Messeinrichtung (210) verbundene Auswerteeinrichtung (250), so dass in einem aufgesetzten Zustand des mindestens einen Prüfkopfs (10), in dem die Prüffläche (22) auf den zumindest einen Teilbereich (115) der zu prüfenden Oberflächenprägung (110) aufgesetzt ist, der sich ergebende Unterdruck oder die stationäre Fluidströmung mit der Messeinrichtung (210) bei Betrieb der Unterdruckerzeugungseinrichtung (270) ermittelbar ist, und die Auswerteeinrichtung (250) ausgebildet ist, anhand des ermittelten Unterdrucks oder der ermittelten Fluidströmung eine Qualitätsinformation auszugeben.

2. Prüfvorrichtung (200) nach Anspruch 1, **dadurch gekennzeichnet, dass** die Messeinrichtung (210) ein Vakuummessgerät ist.

3. Prüfvorrichtung (200) nach Anspruch 1 oder 2, **dadurch gekennzeichnet, dass** zwischen der Unterdruckerzeugungseinrichtung (270) und dem Prüfkopf (10) eine einstellbare Drossel (230) angeordnet ist.

4. Prüfvorrichtung (200) nach Anspruch 3, **dadurch gekennzeichnet, dass** die Messeinrichtung (210) zwischen dem Prüfkopf (10) und der Drossel (230) in der fluidtechnischen Verbindung (220) angeordnet ist, um einen Unterdruck in der fluidtechnischen Verbindung (220) zu ermitteln.

5. Prüfvorrichtung (200) nach Anspruch 3 oder 4, **dadurch gekennzeichnet, dass** zwischen der Drossel (230) und der Vakuumerzeugungseinrichtung (270) eine weitere Messeinrichtung (240) angeordnet ist, mit der der Unterdruck der Vakuumerzeugungseinrichtung (270) ermittelbar ist.

6. Prüfvorrichtung (200) nach einem der vorangehenden Ansprüche, **dadurch gekennzeichnet, dass** an der Prüfseite (20) des Prüfkopfs (10) mindestens ein zur Prüfseite (20) offenes von dem mindestens einen Freivolumen (30) getrenntes Belüftungsvolumen (40) ausgebildet ist, um ein Einströmen von Luft angrenzend an zumindest einen Teil des Reliefbereichs (24) im aufgesetzten Zustand des Prüfkopfs (10) zu ermöglichen.

7. Prüfvorrichtung (200) nach einem der vorangehenden Ansprüche, **dadurch gekennzeichnet, dass** mit dem Prüfkopf (10) ein Aktor (260) gekoppelt ist, um den Prüfkopf (10) im aufgesetzten Zustand über das zu prüfende Profil (100) zu bewegen.

8. Verfahren zur Qualitätsprüfung einer Oberflächenprägung (110) eines Prägeblechs (105) für die Sicherheitsdokumentenherstellung mit einer Vorrichtung (200) nach einem der Ansprüche 1 bis 7, wobei das Verfahren umfasst
Aufsetzen des Prüfkopfs (10) mit Reliefbereich (24) auf die zu prüfende Oberflächenprägung (110), so dass der Reliefbereich (24) auf dem Teilbereich (115) der Oberflächenprägung (110) aufliegt, die mit der zu dem Reliefbereich (24) komplementären Sollkontur (130) korrespondiert,
Evakuieren des Freivolumens (30) in dem Prüfkopf (10) mittels der hiermit fluidtechnisch verbundenen Unterdruckerzeugungseinrichtung (270) und Messen eines sich in der fluidtechnischen Verbindung (220) des mindestens einen Freivolumens (30) in dem mindestens einen Prüfkopf (10) mit der Unterdruckerzeugungseinrichtung (270) einstellenden Unterdrucks oder einer sich einstellenden Fluidströmung mittels einer Messeinrichtung (210) und Ableiten und Ausgeben einer Qualitätsinformation anhand des ermittelten Unterdrucks oder der ermittelten Fluidströmung.

9. Verfahren nach Anspruch 8, **dadurch gekennzeichnet, dass** der sich ergebende Unterdruck oder die sich ergebende Fluidströmung mit einem Referenzunterdruck bzw. einer Referenzfluidströmung verglichen wird, und die Qualitätsinformation anhand dieses Vergleichsergebnisses ermittelt wird, wobei bei einer Übereinstimmung im Rahmen eines vorgegebenen Toleranzintervalls die Qualitätsinformation Erfüllen der Qualitätserfordernisse angibt.

10. Verfahren nach Anspruch 8 oder 9, **dadurch gekennzeichnet, dass** eine Drossel (230), die zwischen dem Prüfkopf (10) und der Unterdruckerzeugungseinrichtung (270) in der fluidtechnischen Verbindung angeordnet ist, teilweise geschlossen wird, so dass in der fluidtechnischen Verbindung (220) zwischen dem Prüfkopf (10) und der Drossel (230), wenn der mindestens eine Prüfkopf (10) auf ein Referenzobjekt (120) mit der Sollkontur (130) aufgesetzt ist, so dass der Reliefbereich (24) des Prüfkopfs (10) auf dem hiermit korrespondierenden Teilbereich (115) der Sollkontur (130) aufliegt, ein Referenzunterdruck, der größer als ein erreichbarer Unterdruck ist, oder eine Referenzfluidströmung eingestellt wird, die kleiner als eine erreichbare Fluidströmung bei geöffneter Drossel (230) ist.

11. Verfahren nach einem der Ansprüche 8 bis 10, **dadurch gekennzeichnet, dass** nach dem Aufsetzen des Prüfkopfs (10) auf die zu prüfende Oberflächenprägung (110) die Drossel (230) so eingestellt wird, dass in der fluidtechnischen Verbindung (220) der Referenzunterdruck oder die Referenzfluidströmung gemessen werden, und die Qualitätsinformation zusätzlich anhand der Drosseleinstellung abgeleitet wird, wobei die Qualitätsanforderung erfüllt ist, wenn der Referenzunterdruck oder die Referenzfluidströmung im Rahmen eines Toleranzbereichs bei einer Drosseleinstellung erreicht werden, die der Referenzeinstellung im Rahmen eines weiteren Toleranzbereichs entspricht oder einen Strömungsquerschnitt stärker begrenzt als in der Referenzeinstellung.

12. Verfahren nach einem der Ansprüche 8 bis 11, **dadurch gekennzeichnet, dass** der Prüfkopf (10) über die zu prüfende Oberflächenprägung (110) bewegt wird und das Ableiten und Ausgeben der Qualitätsinformation fortlaufend oder iterativ erfolgt.

## Claims

1. A testing device (200) for quality testing of a surface embossing (110) of an embossing plate (105) for the production of security documents, comprising at least one test head (10) having a test surface (22) on a test side (20), the test surface (22) having at least one relief area (24) which encircles at least one free volume (30), the at least one relief area (24) having a surface relief (26) which is complementary to at least one portion (115) of a target contour (130) of the surface embossing (110) to be tested, and the at least one free volume (30) being open toward the test side (20) of the at least one test head (10),
a vacuum generating device (270) which is fluidly connected by the at least one test head (10) to the at least one free volume (30);
a measuring device (210) which is fluidly connected to the vacuum generating device (270) and the free volume (30), and
an evaluation unit (250) which is connected to the measuring device (210), so that when the at least one test head (10) is in the mounted state through placement of the test surface (22) on the at least one portion (115) of the surface embossing (110) to be tested, the resulting vacuum or stationary fluid flow can be determined using the measuring device (210) during operation of the vacuum generating device (270), and the evaluation unit (250) is designed to output quality information based on the determined vacuum or on the determined fluid flow.

2. The testing device (200) as set forth in claim 1, **characterized in that** the measuring device (210) is a vacuum measuring device.

3. The testing device (200) as set forth in claim 1 or 2, **characterized in that** an adjustable throttle (230) is arranged between the vacuum generating device (270) and the test head (10).

4. The testing device (200) as set forth in claim 3, **characterized in that** the measuring device (210) is arranged between the test head (10) and the throttle (230) in the fluid connection (220) in order to detect a vacuum in the fluid connection (220).

5. The testing device (200) as set forth in claim 3 or 4, **characterized in that** an additional measuring device (240) is arranged between the throttle (230) and the vacuum generating device (270) with which the vacuum of the vacuum generating device (270) can be determined.

6. The testing device (200) as set forth in one of the preceding claims, **characterized in that** at least one ventilation volume (40) which is open toward the test side (20) and separated from the at least one free volume (30) is formed on the test side (20) of the test head (10) in order to allow an inflow of air adjacent to at least a portion of the relief area (24) when the test head (10) is in the mounted state.

7. The testing device (200) as set forth in one of the preceding claims, **characterized in that** an actuator (260) is coupled with the test head (10) in order to move the test head (10) over the profile to be tested (100) when in the mounted state.

8. A method for quality testing of a surface embossing (110) of an embossing plate (105) for the production of security documents comprising a device (200) as set forth in one of claims 1 to 7, the method comprising mounting the test head (10) with relief area (24) on the surface embossing to be tested (110) so that the relief area (24) rests on the portion (115) of the surface embossing (110) which corresponds to the desired contour (130) that is complementary to the relief area (24), evacuating the free volume (30) in the test head (10) by means of the vacuum generating device (270) that is fluidly connected thereto and measuring a vacuum or a fluid flow that is established in the fluid connection (220) of the at least one free volume (30) in the at least one test head (10) with the vacuum generating device (270) by means of a measuring device (210), and deriving and outputting quality information on the basis of the determined vacuum or the determined fluid flow.

9. The method as set forth in claim 8, **characterized in that** the resulting vacuum or the resulting fluid flow is compared to a reference vacuum or a reference fluid flow, and the quality information is determined on the basis of this comparison result, with the quality information being identified as satisfying the quality requirements in the event of a match within a predetermined tolerance interval.

10. The method as set forth in claim 8 or 9, **characterized in that** a throttle (230) which is arranged between the test head (10) and the vacuum generating device (270) in the fluid connection is partially closed, so that, in the fluid connection (220) between the test head (10) and the throttle (230), when the at least one test head (10) is mounted on a reference object (120) with the target contour (130) so that the relief area (24) of the test head (10) rests on the portion (115) of the target contour (130) corresponding thereto, a reference vacuum is established which is greater than a vacuum that can be achieved when the throttle (230) is open, or a reference fluid flow is established which is less than a fluid flow that can be achieved when the throttle (230) is open.

11. The method as set forth in one of claims 8 to 10, **characterized in that**, after the test head (10) has been mounted on the surface embossing (110) to be tested, the throttle (230) is set such that the reference vacuum or the reference fluid flow can be measured, and the quality information is also derived from the throttle setting, the quality requirement being satisfied if the reference vacuum or the reference fluid flow are reached within a tolerance range with a throttle setting that corresponds to the reference setting within a further tolerance range or limits a flow cross section to a greater extent than in the reference setting.

12. The method as set forth in one of claims 8 to 11, **characterized in that** the test head (10) is moved over the surface embossing (110) to be tested and the quality information is derived and outputted continuously or iteratively.

## Revendications

1. Dispositif de test (200) destiné à tester la qualité d'un embossage de surface (110) d'une tôle embossée (105) pour la production de documents de sécurité, ledit dispositif de test comprenant
au moins une tête de test (10) qui comporte une surface de test (22) sur un côté de test (20), la surface de test (22) comportant au moins une zone en relief (24) entourant au moins un volume libre (30), l'au moins une zone en relief (24) comportant un relief de surface (26) qui est complémentaire d'au moins une zone partielle (115) d'un contour cible (130) de l'embossage de surface (110) à tester, l'au moins un volume libre (30) étant ouvert sur le côté de test (20) de l'au moins une tête de test (10),
un moyen de génération de dépression (270) qui est relié fluidiquement à l'au moins un volume libre (30) par le biais de l'au moins une tête de test (10) ;
un moyen de mesure (210) relié fluidiquement au moyen de génération de dépression (270) et au volume libre (30), et
un moyen d'évaluation (250) relié au moyen de mesure (210) de sorte que, lorsque l'au moins une tête de test (10) est en place et que la surface de test (22) est placée sur l'au moins une zone partielle (115) de l'embossage de surface (110) à tester, la dépression résultante ou le débit de fluide stationnaire puisse être déterminé(e) avec le moyen de mesure (210) lorsque le moyen de génération de dépression (270) est en fonctionnement, et le moyen d'évaluation (250) étant conçu pour délivrer des informations de qualité sur la base de la dépression déterminée ou du débit de fluide déterminé.

2. Dispositif de test (200) selon la revendication 1, **caractérisé en ce que** le moyen de mesure (210) est un vacuomètre.

3. Dispositif de test (200) selon la revendication 1 ou 2, **caractérisé en ce qu'**un étranglement réglable (230) est disposé entre le moyen de génération de dépression (270) et la tête de test (10).

4. Dispositif de test (200) selon la revendication 3, **caractérisé en ce que** le moyen de mesure (210) est disposé dans la liaison fluidique (220) entre la tête de test (10) et l'étranglement (230) afin de déterminer une dépression dans la liaison fluidique (220).

5. Dispositif de test (200) selon la revendication 3 ou 4, **caractérisé en ce qu'**un autre moyen de mesure (240), avec lequel la dépression du moyen de génération de dépression (270) peut être déterminée, est disposé entre l'étranglement (230) et le moyen de génération de dépression (270).

6. Dispositif de test (200) selon l'une des revendications précédentes, **caractérisé en ce qu'**au moins un volume de ventilation (40) ouvert du côté de test (20) et séparé de l'au moins un volume libre (30), est formé du côté de test (20) de la tête de test (10) pour permettre un afflux d'air de manière adjacente à au moins une partie de la zone de relief (24) lorsque la tête de test (10) est en place.

7. Dispositif de test (200) selon l'une des revendications précédentes, **caractérisé en ce qu'**un actionneur (260) est accouplé à la tête de test (10) pour déplacer la tête de test (10) sur le profilé (100) à tester une fois en place.

8. Procédé de test de qualité d'un embossage de surface (110) d'une tôle embossée (105) pour la production de documents de sécurité à l'aide d'un dispositif (200) selon l'une des revendications 1 à 7, ledit procédé comprenant les étapes suivantes
placer la tête de test (10) avec la zone en relief (24) sur l'embossage de surface (110) à tester de sorte que la zone en relief (24) repose sur la zone partielle (115) de l'embossage de surface (110) qui correspond au contour cible (130) complémentaire de la zone en relief (24), faire le vide dans le volume libre (30) dans la tête de test (10) à l'aide du moyen de génération de dépression (270) relié fluidiquement à celle-ci et mesurer à l'aide d'un moyen de mesure (210) une dépression ou un débit de fluide qui peuvent être réglés dans la liaison fluidique (220) de l'au moins un volume libre (30) dans l'au moins une tête de test (10) à l'aide du moyen de génération de dépression (270) et déduire et délivrer une information de qualité sur la base de la dépression déterminée ou du débit de fluide déterminé.

9. Procédé selon la revendication 8, **caractérisé en ce que** la dépression résultante ou le débit de fluide résultant est comparé(e) à une dépression de référence ou un débit de fluide de référence, et l'information de qualité est déterminée sur la base de ce résultat de comparaison, l'information de qualité indiquant que les exigences de qualité ont été satisfaites s'il existe une correspondance dans un intervalle de tolérance prédéterminé.

10. Procédé selon la revendication 8 ou 9, **caractérisé en ce qu'**un étranglement (230), qui est disposé entre la tête de test (10) et le moyen de génération de dépression (270) dans la liaison fluidique, est partiellement fermé de sorte qu'une dépression de référence, qui est supérieure à une dépression réalisable, ou un débit de fluide de référence, qui est inférieur à un débit de fluide réalisable lorsque l'étranglement (230) est ouvert, est réglé(e) dans la liaison fluidique (220) entre la tête de test (10) et l'étranglement (230), lorsque l'au moins une tête de test (10) est placée sur un objet de référence (120) avec le contour cible (130), de sorte que la zone en relief (24) de la tête de test (10) repose sur la zone partielle correspondante (115) du contour cible (130).

11. Procédé selon l'une des revendications 8 à 10, **caractérisé en ce que**, après que la tête de test (10) a été placée sur la surface d'embossage (110) à tester, l'étranglement (230) est réglé de manière que la dépression de référence ou le débit de fluide de référence soit mesuré(e) dans la liaison fluidique (220) et l'information de qualité est en outre déduite sur la base du réglage de l'étranglement, l'exigence de qualité étant satisfaite lorsque la dépression de référence ou le débit de fluide de référence est atteint(e) dans une plage de tolérance pour un réglage d'étranglement qui correspond au réglage de référence dans une plage de tolérance plus large ou qui limite une section transversale d'écoulement plus fortement que dans le réglage de référence.

12. Procédé selon l'une des revendications 8 à 11, **caractérisé en ce que** la tête de test (10) est déplacée sur la surface d'embossage (110) à tester et l'information de qualité est déduite et délivrée de manière continue ou itérative.
